# EUROPEAN PATENT SPECIFICATION

(11) **EP 4 235 013 B1**
(45) Date of publication and mention of the grant of the patent: **31.12.2025**
(21) Application number: 22159269.4
(22) Date of filing: 28.02.2022
(51) Int. Cl.: F17C 3/08

(54) **CRYOGENIC LIQUID TANK FOR AN AIRCRAFT AND METHOD FOR MANUFACTURING THE SAME**
KRYOGENER FLÜSSIGKEITSBEHÄLTER FÜR EIN FLUGZEUG UND VERFAHREN ZU SEINER HERSTELLUNG
RÉSERVOIR DE LIQUIDE CRYOGÉNIQUE POUR UN AVION ET SON PROCÉDÉ DE FABRICATION

(43) Date of publication of application: 30.08.2023
(73) Proprietor: Airbus SAS, 31700 Blagnac (FR)
(72) Inventor: Friedberger, Alois, 85521 Taufkirchen (DE); Silvanus, Jürgen, 85521 Taufkirchen (DE)
(74) Representative: KASTEL Patentanwälte PartG mbB

(56) References cited:
- DE-A1- 102008 019 594
- DE-A1- 102017 223 652
- JP-A- S58 130 565
- US-A1- 2005 230 554
- US-B2- 11 214 140

## Description

The invention relates to a cryogenic liquid tank, preferably for an aircraft. The invention further relates to an aircraft equipped with such a tank and a method of manufacturing the cryogenic liquid tank.

Currently, optical fibers are a common approach to handle distributed measurement, i.e. measuring a parameter at several locations, e.g. with fiber bragg gratings (FBG). In principle, most of the relevant parameters in a liquid hydrogen (LH2) tank can be measured with optical fibers. While it is a promising approach, it is not clear yet whether this approach can be developed into an accepted industry standard, in particular in the field of aircraft manufacturing.

A further current approach is using a sensor network where each sensor entity transmits the data using a wireless data transfer protocol. However, even with this approach, cables are still needed to supply electrical power, for example. There are different options for energy harvesting to avoid the cables for powering. Energy harvesting, while feasible, requires a well-tailored design for the application and may thus not always be a viable option.

EP 3 582 233 A1 discloses a method for printed cable installation in composite elements of aircraft. The method includes printing conductive paths onto carbon fiber reinforced composite parts.

DE 10 2008 019 594 A1 discloses a thermally insulated container for condensed gases for a motor vehicle operable with cryogenically stored fuel. The container has an inner container for holding the condensed gas, which is held thermally insulated in an outer container. The inner container is constructed of a dense inner layer of metal surrounded on the outside by a reinforcing layer of fiber material. The inner container is provided with at least one sensor.

DE 10 2017 223 652 A1 discloses a pressure vessel for storing fuel comprising a fiber-reinforced layer, a first conductor layer, and a second conductor layer. The first conductor layer and the second conductor layer surround the fiber-reinforced layer.

Additional reference is made to JP S58 130 565 A, US 2005 / 230 554 A1, and US 11 215 140 B2.

It is the object of the invention to provide improved measures for monitoring and manufacturing tanks for cryogenic liquids. The object is achieved by the subject-matter of the independent claims. Preferred embodiments are subject-matter of the dependent claims.

The invention provides a cryogenic liquid tank for storing cryogenic liquids, such as liquid hydrogen, the tank comprising:
- a tank body having at least one tank wall that defines a cryogenic storage volume for storing a cryogenic liquid at cryogenic temperatures, wherein the tank wall is formed out of at least one piece of plate-like metal material; and
- an electrically conductive track structure that is formed on the at least one tank wall and configured for conducting electricity from a terminal to a sensor.

The tank body and the electrically conductive track structure form a layer structure.

In an embodiment the tank further comprises at least one sensor that is electrically coupled to the electrically conductive track structure and arranged on the tank wall.

In an embodiment at least one sensor is integrally formed with the conductive track structure.

In an embodiment the at least one sensor is chosen from a group consisting of:
- a capacitive sensor configured for changing its capacitance depending on a physical characteristic relating to the cryogenic liquid;
- a resistive sensor configured for changing its resistance depending on a physical characteristic relating to the cryogenic liquid;
- a thermocouple sensor configured for generating a voltage depending on the temperature relating to the cryogenic liquid; and
- a radiofrequency sensor configured for transmitting, receiving, or transceiving radio waves, so as to allow measuring a physical characteristic relating to the cryogenic liquid.

In an embodiment the at least one tank wall comprises an inside portion that faces towards the storage volume and an outside portion that faces away from the storage volume, wherein the electrically conductive track structure is formed on the inside portion and/or outside portion.

In an embodiment the tank body comprises an inner tank wall and an outer tank wall, wherein the inner tank wall defines the storage volume, and the electrically conductive track structure is formed on the inner tank wall and/or the outer tank wall.

In an embodiment the inner tank wall comprises an inside portion that faces towards the storage volume and an outside portion that faces away from the storage volume, and the electrically conductive track structure is formed on the inside portion and/or the outside portion.

In an embodiment outer tank wall comprises an inside portion that faces towards the storage volume and an outside portion that faces away from the storage volume, and the electrically conductive track structure is formed on the inside portion and/or the outside portion.

In an embodiment the tank body comprises a vacuum cavity that encompasses the storage volume and holds a vacuum. In an embodiment the vacuum cavity is defined between the outer tank wall and the inner tank wall.

In an embodiment the tank body and the electrically conductive track structure form a layer structure.

In an embodiment the layer structure comprises an electrically insulating substrate layer that is part of, formed on, or attached to the at least one tank wall and an electrically conductive layer formed on the electrically insulating substrate layer so as to be electrically insulated from the at least one tank wall; and/or wherein the layer structure comprises a protective electrically insulating layer formed on top of the electrically conductive layer.

The invention provides a tank arrangement for an aircraft, the tank arrangement comprising a preferred tank and a control unit that is electrically coupled to the electrically conductive track structure and configured for measuring physical parameters that relate to the cryogenic liquid.

The invention provides an aircraft, preferably an airplane, comprising a preferred tank or a preferred tank arrangement.

The invention provides a method for manufacturing a cryogenic liquid tank for storing cryogenic liquids, such as liquid hydrogen, the method comprising:
a) forming a tank body that has least one tank wall, preferably out of at least one piece of plate-like metal material;
b) forming an electrically conductive track structure on the at least one tank wall of a cryogenic liquid tank, such that the electrically conductive track structure is suitable for conducting electricity from a terminal to a sensor by oxidizing or letting oxidize the metal material so as to form an insulating substrate layer and deposition of conductive material on the insulating substrate layer so as to form a conductive layer; and
c) closing the tank wall so as to define a cryogenic storage volume for storing a cryogenic liquid at cryogenic temperatures; or
d) forming an electrically conductive track structure on a piece of plate-like metal material, such that the electrically conductive track structure is suitable for conducting electricity from a terminal to a sensor; and subsequently
e) forming the metal material in to a tank body that has least one tank wall that defines a cryogenic storage volume for storing a cryogenic liquid (30) at cryogenic temperatures.

In an embodiment step d) comprises oxidizing or letting oxidize the metal material so as to form an insulating substrate layer.

In an embodiment step d) comprises deposition of conductive material on the insulating substrate layer so as to form a conductive layer.

In an embodiment the method further comprises a step f) of forming at least one sensor that is electrically coupled to the electrically conductive track structure on the piece of plate-like material and/or the tank wall.

Cryogenic liquid hydrogen (LH2) tanks usually have many sensors for operation, control and safety. As a result, installation of several sensors with lots of cables is required. Each cable usually needs to be properly installed, fixed and checked. Cables and corresponding connectors that are specifically made for cryogenic temperatures are rather complex specialized products in order to ensure reliability.

Examples for typical parameters that are measured by the installed sensors are temperature, pressure, H2 gas and LH2 level monitoring (e.g. radar antennas for fuel level monitoring). Usually, no single but distributed measurement is advantageous which further increases the amount of sensors.

The ideas presented allow reduction of harnesses by replacing the cables with conducting tracks arranged, e.g. printed, on the tank wall(s) itself.

Furthermore, the measures presented herein provide an independent second measurement principle to the known ones, thereby enabling a check on each other. In other words, different sensors are installed in addition to optical fibers, for example, and connected for power and data transfer.

In an embodiment replacement of conventional cables by printing conductive tracks directly on the tank wall is possible.

This can be done on different portions of the tank wall(s), such as inside the inner tank wall for sensors installed on the inner tank wall surface; and/or outside the inner tank wall for sensors installed on the outside surface of the inner tank wall; and/or inside the outer tank wall for sensors installed on the inner surface of the outer tank wall; and/or outside the outer tank wall for sensors installed on the outer side of the outer tank wall.

Usually, inside the inner tank wall sensors and conductive tracks are exposed to gaseous hydrogen or LH2 at a temperature of about 20 K. On the outside of the inner tank wall sensors and conductive tracks are exposed to vacuum at a temperature of about 20 K. The inside of the outer tank wall typically exhibits a "normal" temperature, i.e. a non-cryogenic temperature, for the sensors and tracks, however including a vacuum. The outside of the outer tank wall exposes the sensors and tracks to "normal atmosphere" at "normal" temperature.

In case of a metallic tank, the tank material is preferably aluminium which has a large coefficient of thermal expansion (CTE). Considering the large temperature range which the tank is exposed to from manufacturing to storage to operation, high stress and consequently cracks are to be avoided by handling a possible CTE mismatch.

One idea is to use the tank material itself as the base material for all conductors and insulators. For example, if the tank is made of aluminium the natural oxide layer (or as the case may be artificially created aluminium oxide) on the aluminium tank can be used as the insulator between individual conductor tracks. In an embodiment a further metal layer is deposited and structured on top of that insulator to constitute the electrical tracks. This metal layer is preferably again aluminium. The layer may be covered with a protective insulator. That insulator is preferably aluminium oxide (natural oxide or artificially created).

The metal tank can be used as a common electrical ground contact. Planar conductor configurations can be designed to allow for electrical shielding. This can be further improved, if preferably additional layers of conductor and dielectric are added. This can allow the transport of high frequency signals, e.g. for RF antennas for LH2 fuel gauging.

With only minor additional effort and weight, additional conductive tracks can be printed to establish a redundant electrical network. Robots can do the printing after the tank has been formed. If required, all that can be done alternatively already at the supplier of the metal sheet to avoid impact on lead time of the tank manufacturer.

In case of certain large CTE mismatch, the insulator of aluminium oxide can be replaced by a dielectric with more suitable CTE or with a CTE gradient. The rest of the ideas remain unchanged.

The conductive tracks can also be used to directly form an electrical capacitor such as an interdigital capacitor (IDC). This can be used for capacitive fuel level monitoring. Having an IDC with different spacing between the IDC fingers, i.e. different electrical capacitances, an array can be formed that addresses different measurement ranges.

Preferably, metal meanders can be used to form resistive temperature sensors.

The conductive tracks can also be used to directly form antenna elements for RF sensors. By doing so, a distributed antenna array can be established.

A preferred approach for (metal) layer deposition is cold spray deposition of (metal) powder. With this the introduction of thermal energy into the tank material can be limited.

The ideas presented herein allow a significantly reduced cabling effort in cryogenic tanks. They also allow for easier manufacturing of increased redundancy. Also the integrated metal layers are multifunctional and are allowed of function as connections and sensors alike.

Embodiments of the invention are described in more detail with reference to the accompanying schematic drawings that are listed below. Therein:
- Fig. 1: depicts an aircraft having a cryogenic tank;
- Fig. 2: depicts a cross-section of the cryogenic tank; and
- Fig. 3: depicts an embodiment of a layer structure.

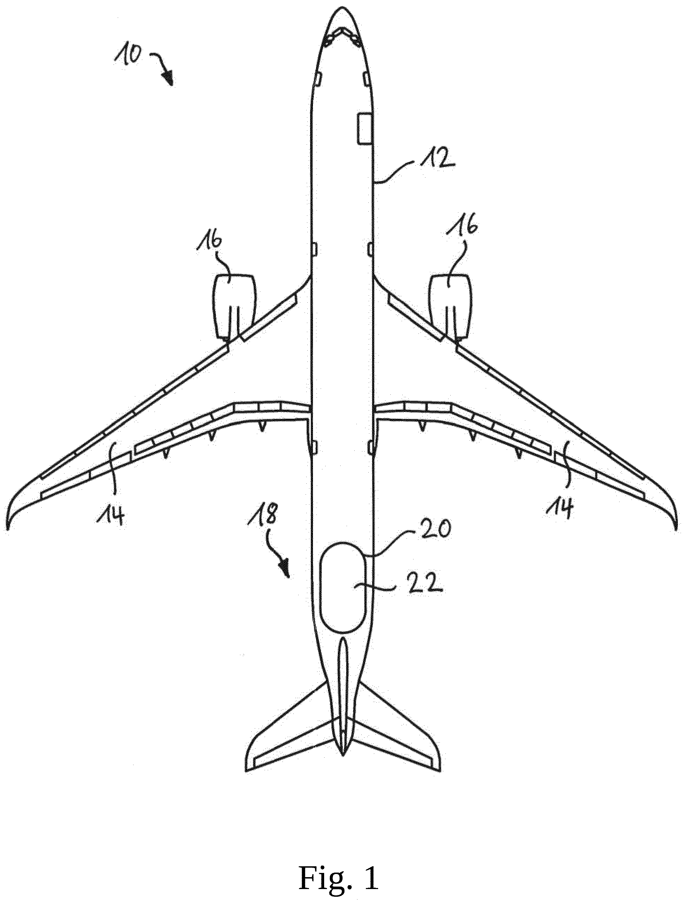

Referring to Fig. 1, an aircraft 10 comprises a fuselage 12. The aircraft 10 further comprises a pair of wings 14 that are attached to the fuselage 12. Furthermore, an engine 16 is attached to each wing 14.

The aircraft 10 comprises an aft section 18, which includes a horizontal and vertical tail plane. Furthermore, the aircraft 10 comprises a tank arrangement 20.

The tank arrangement 20 includes a cryogenic liquid tank 22 that is preferably arranged in the aft section 18. It should be noted that the liquid tank 22 may have a different shape and/or be located in a different section of the aircraft 10.

The tank 22 includes hydrogen fuel that can be directly fed to the engines 16. The hydrogen fuel may also be fed to fuel cells (not depicted) where the hydrogen is converted into electrical energy, and the electrical energy is then fed to the engines 16. The hydrogen fuel is stored in the tank 22 in the form of a cryogenic liquid, i.e. liquid hydrogen (LH2).

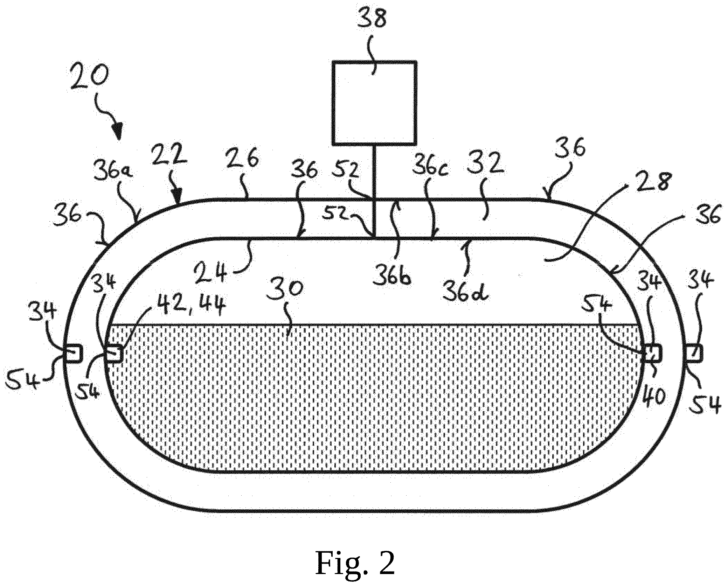

Referring to Fig. 2, the tank arrangement 20 is depicted in more detail. The tank 22 has an inner tank wall 24 and an outer tank wall 26. The inner tank wall 22 defines a storage volume 28 for a cryogenic liquid 30, here LH2. It should be noted that the principles described herein may also apply to cryogenic tanks in general and not only those for aircraft 10.

The inner tank wall 24 and the outer tank wall 26 define a vacuum cavity 32. The vacuum cavity 32 holds a vacuum in order to improve thermal insulation of the storage volume 28.

In a manner known per se and therefore not depicted here for sake of brevity, hydrogen lines fluidly connect the storage volume 28 to the engines 16.

The tank 22 further comprises a plurality of sensors 34 that can be arranged on an inside or outside portion of the inner and outer tank walls 24, 26, respectively.

On each tank wall 24, 26 that has a sensor 34 an electrically conductive track structure 36 is integrally formed with the respective tank wall 24, 26. The electrically conductive track structure 36 electrically connects each sensor 34 to a control unit 38. The control unit 38 may be arranged anywhere in the aircraft 10, where control units are typically kept.

The control unit 38 is connected through the tank walls 24, 26 by suitable connectors that are known per se.

The sensor 34 may be integrated into the electrically conductive track structure 36 and have different configurations. In one embodiment, the sensor 34 may be formed as a meandering conducting path in order to form a resistor 40. The resistance of the resistor 40 can be determined by the control unit 38 thereby allowing a temperature measurement.

In another embodiment, two conducting paths made of different metals can join at a certain location forming a thermocouple.

In another embodiment, the sensor 34 may be formed as an interdigital structure. In this configuration the sensor 34 forms a capacitor 42. The capacity of the capacitor 42 can be determined by the control unit 38 thereby allowing measurements of the liquid level in the storage volume 28. In this case the sensor 34 is arranged on the inside of the inner tank wall 24 and may extend for a substantial portion along the inner tank wall 24.

In another arrangement the relative movement of the digits of the interdigital structure due to temperature and/or pressure changes can be used to determine the thermal expansion/contraction of the respective tank wall 24, 26 or the respective pressure within the enclosed volume be it storage volume 28 or vacuum cavity 32.

In another embodiment the sensor 34 may be formed as a radio frequency (RF) antenna 44. The RF antenna 44 can be controlled by the control unit 38 in order to measure liquid levels in a manner known per se.

In another embodiment the sensor 34 may be part of a sensor array (not depicted). The sensor array comprises a plurality of sensors 34 of the same type, e.g. resistors 40, capacitors 42 or RF antennas 44.

The sensor array may be configured such that temperature is measured at different locations at the same time. With this leaks can be not only detected but also located.

It should be noted that - while not shown in Fig. 2 - the vacuum cavity 32 may include support elements that support the outer tank wall 26 with respect to the inner tank wall 24. The support elements may be made of the same material as the tank walls 24, 26 and may also have formed on them the electrically conductive track structure 36.

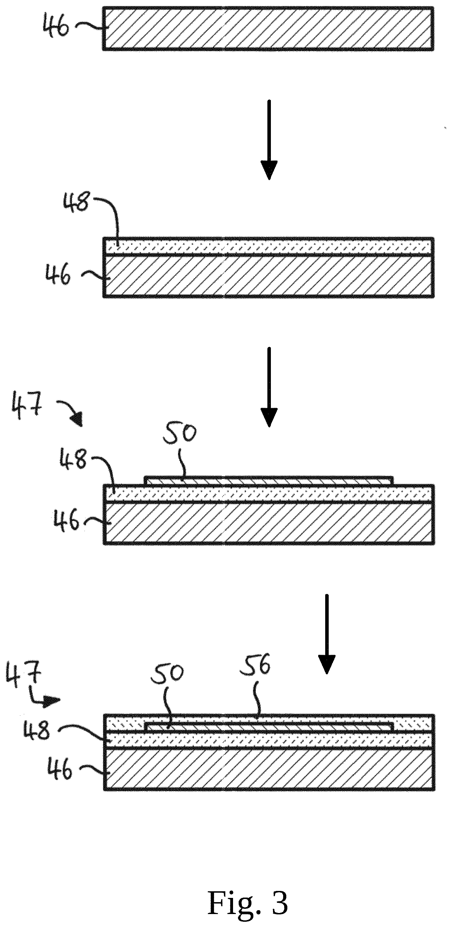

Referring to Fig. 3, a method for manufacturing the tank 22 is described in more detail.

A plate-like metal material 46 is provided. The plate-like metal material 46 serves as a substrate in a layer structure 47 to be formed. The plate-like metal material 46 is preferably an aluminium plate.

The plate-like metal material 46 is mechanically formed into a hollow tank body such that the plate-like metal material 46 becomes the inner tank wall 24. The hollow tank body is roughly cylindrical in shape, but may also have a different shape. The inside surface and the outside surface of the inner tank walls 24 is kept accessible such that the electrically conductive structure 36 may be formed thereon.

The same step is performed for the outer tank wall 26, which at this point is still a separate part from the inner tank wall 24.

An electrically insulating substrate layer 48 is provided on the inner and/or outer portions of the inner tank wall 24 and/or the outer tank wall 26 as desired. The electrically insulating substrate layer 48 preferably includes a metal oxide of the same metal material that is the plate-like metal material 46, such as aluminium oxide.

Depending on the metal material the electrically insulating substrate layer 48 can be formed naturally or artificially by anodization.

Next, an electrically conductive layer 50 is formed on top of the electrically insulating substrate layer 48. Preferably the electrically conductive layer 50 is made of the same material as the plate-like metal material 46, i.e. the inner and outer tank walls 24, 26.

The electrically conductive layer 50 is deposited to form the electrically conductive track structure 36. The electrically conductive layer 50 can be formed by a cold metal deposition process, such as cold spray deposition. The electrically conductive layer 50 can be formed by a galvanization process or a local galvanization process.

The electrically conductive track structure 36 as shown in Fig. 2 includes a plurality of electrically conducting paths 36a-d. Each conductive path 36a-d includes a first terminal 52 for connecting to a control unit 38 and a second terminal 54 for connecting to a sensor 34.

The electrically conductive layer 50 may be covered with a protective electrically insulating layer 56. The protective electrically insulating layer 56 may be formed by depositing an electrically insulating material, such as metal oxide. Preferably, the protective electrically insulating layer 56 is also deposited by a cold metal deposition process such as cold metal spraying. The protective electrically insulating layer 56 may also be made of the same material as the electrically insulating substrate layer 48.

The layer structure 47 includes a portion of the plate-like metal material 46 or respective inner or outer tank wall 24, 26, the electrically insulating substrate layer 48, the electrically conductive layer 50, and - as the case may be - the protective electrically insulating layer 56.

Further parts may be joined to the formed metal material 46, i.e. the inner or outer tank wall 24, 26 in order to complete the respective tank wall 24, 26 as exemplified in Fig. 2. During this step the inner tank wall 24 is also inserted into the outer tank wall 26.

Where necessary and at any point during the process, the metal material 46 or inner and outer tank walls 24, 26 may be welded or the like in order to define and enclose the storage volume 28 or the vacuum cavity 32. Openings may be formed at the appropriate positions in the respective tank wall 24, 26 in order to allow for through connectors.

Support elements may be used, which may be prepared separately and are inserted into the vacuum cavity 32 to support the outer tank wall 26 relative to the inner tank wall 24. The support elements may also have formed on them the same layer structure 47. The support elements may get electrically connected to the conductive layer structure 32 on the tank walls 24, 26.

The invention provides improved measures for monitoring and manufacturing tanks for cryogenic liquids. It is proposed that the tank (22) is manufactured in a way that signal and power lines from a control unit (38) to sensors (34) of the cryogenic tank (22) are integrated with the tank walls (24, 26). The conductive track structure (32) so formed has a layer structure (47) that uses the naturally occurring or artificially generated insulating substrate layer (48) on the tank wall material as a substrate on top of which conductive paths (32a-d) are formed that connect the sensors (34) to the control unit (38).

### List of reference signs:

- 10: aircraft
- 12: fuselage
- 14: wing
- 16: engine
- 18: aft section
- 20: tank arrangement
- 22: cryogenic liquid tank
- 24: inner tank wall
- 26: outer tank wall
- 28: storage volume
- 30: cryogenic liquid
- 32: vacuum cavity
- 34: sensor
- 36: electrically conductive track structure
- 38: control unit
- 40: resistor
- 42: capacitor
- 44: radio frequency (RF) antenna
- 46: plate-like metal material
- 47: layer structure
- 48: electrically insulating substrate layer
- 50: electrically conductive layer
- 36a: electrically conducting path
- 36b: electrically conducting path
- 36c: electrically conducting path
- 36d: electrically conducting path
- 52: first terminal
- 54: second terminal
- 56: protective electrically insulating layer

## Claims

1. A method for manufacturing a cryogenic liquid tank (22) for storing cryogenic liquids (30), such as liquid hydrogen, the method comprising:
a) forming a tank body that has least one tank wall (24, 26) out of at least one piece of plate-like metal material (46);
b) forming an electrically conductive track structure (36) on the piece of plate-like metal material (46), such that the electrically conductive track structure (36) is suitable for conducting electricity from a terminal (52) to a sensor (34); and subsequently
c) forming the metal material (46) in to a tank body that has least one tank wall (24, 26) that defines a cryogenic storage volume (28) for storing a cryogenic liquid (30) at cryogenic temperatures.

2. The method according to claim 1, wherein step b) comprises oxidizing or letting oxidize the metal material (46) so as to form an insulating substrate layer (48).

3. The method according to claim 2, wherein step b) comprises deposition of conductive material on the electrically insulating substrate layer (48) so as to form an electrically conductive layer (50).

4. A method for manufacturing a cryogenic liquid tank (22) for storing cryogenic liquids (30), such as liquid hydrogen, the method comprising:
a) forming a tank body that has least one tank wall (24, 26) out of at least one piece of plate-like metal material (46);
b) forming an electrically conductive track structure (36) on the at least one tank wall (24, 26) of a cryogenic liquid tank (30), such that the electrically conductive track structure (36) is suitable for conducting electricity from a terminal (52) to a sensor (34) by oxidizing or letting oxidize the metal material (46) so as to form an insulating substrate layer (48) and deposition of conductive material on the electrically insulating substrate layer (48) so as to form an electrically conductive layer (50); and
c) closing the tank wall (24, 26) so as to define a cryogenic storage volume (28) for storing a cryogenic liquid (30) at cryogenic temperatures.

5. The method according to any of the claims 1 to 4 further comprising a step d) of forming at least one sensor (34) that is electrically coupled to the electrically conductive track structure (36) on the piece of plate-like metal material (46) and/or the tank wall (24, 26).

6. A cryogenic liquid tank (22) for storing cryogenic liquids (30), the tank (22) comprising:
- a tank body having at least one tank wall (24, 26) that defines a cryogenic storage volume (28) for storing a cryogenic liquid (30) at cryogenic temperatures, wherein the tank wall (24, 26) is formed out of at least one piece of plate-like metal material (46); and
- an electrically conductive track structure (36) that is formed on the at least one tank wall (24, 26) and configured for conducting electricity from a terminal (52) to a sensor (34), wherein the tank body and the electrically conductive track structure (36) form a layer structure (47).

7. The tank (22) of claim 6, further comprising at least one sensor (34) that is electrically coupled to the electrically conductive track structure (36) and arranged on the tank wall (24, 26).

8. The tank (22) of claim 7, wherein at least one sensor (34) is integrally formed with the conductive track structure (36).

9. The tank (22) of claim 7 or 8, wherein the at least one sensor (34) is chosen from a group consisting of:
- a capacitive sensor (42) configured for changing its capacitance depending on a physical characteristic relating to the cryogenic liquid (30);
- a resistive sensor (40) configured for changing its resistance depending on a physical characteristic relating to the cryogenic liquid (30);
- a thermocouple sensor configured for generating a voltage depending on the temperature relating to the cryogenic liquid; and
- a radiofrequency sensor (44) configured for transmitting, receiving, or transceiving radio waves, so as to allow measuring a physical characteristic relating to the cryogenic liquid.

10. The tank (22) of any of the claims 6 to 9, wherein the at least one tank wall (24, 26) comprises an inside portion that faces towards the storage volume (28) and an outside portion that faces away from the storage volume (28), wherein the electrically conductive track structure (36) is formed on the inside portion and/or outside portion.

11. The tank (22) of any of the claims 6 to 10, wherein the tank body comprises an inner tank wall (24) and an outer tank wall (26), wherein the inner tank wall (24) defines the storage volume (28), and the electrically conductive track structure (36) is formed on the inner tank wall (24) and/or the outer tank wall (26).

12. The tank (22) of any of the claims 6 to 11, wherein the tank body comprises a vacuum cavity (32) that encompasses the storage volume (28) and holds a vacuum.

13. The tank (22) of any of the claims 6 to 12, wherein the layer structure (47) comprises an electrically insulating substrate layer (48) that is part of or formed on the at least one tank wall (24, 26) and an electrically conductive layer (50) formed on the electrically insulating substrate layer (48) so as to be electrically insulated from the at least one tank wall (24, 26); and/or wherein the layer structure (47) comprises a protective electrically insulating layer (56) formed on top of the electrically conductive layer (50).

14. A tank arrangement (20) for an aircraft (10), the tank arrangement (20) comprising a tank (22) according to any of the claims 6 to 13 and a control unit (38) that is electrically coupled to the electrically conductive track structure (36) and configured for measuring physical parameters that relate to the cryogenic liquid (30).

15. An aircraft (10) comprising a tank (22) according to any of the claims 6 to 13 or a tank (22) arrangement according to claim 14.

## Patentansprüche

1. Verfahren zur Herstellung eines Behälters für kryogene Flüssigkeiten (22) zum Speichern von kryogenen Flüssigkeiten (30), wie etwa flüssigem Wasserstoff, wobei das Verfahren Folgendes umfasst:
a) Bilden eines Behälterkörpers, der mindestens eine Behälterwand (24, 26) aus mindestens einem Stück eines plattenförmigen Metallmaterials (46) aufweist;
b) Bilden einer elektrisch leitfähigen Leiterbahnstruktur (36) auf dem Stück aus plattenartigem Metallmaterial (46), so dass die elektrisch leitfähige Leiterbahnstruktur (36) zum Leiten von Elektrizität von einem Anschluss (52) zu einem Sensor (34) geeignet ist; und anschließend
c) Bilden des Metallmaterials (46) zu einem Behälterkörper, der mindestens eine Behälterwand (24, 26) aufweist, die ein kryogenes Speichervolumen (28) zum Speichern einer kryogenen Flüssigkeit (30) bei kryogenen Temperaturen definiert.

2. Verfahren nach Anspruch 1, wobei Schritt b) Oxidieren oder Oxidierenlassen des Metallmaterials (46) umfasst, um eine isolierende Substratschicht (48) zu bilden.

3. Verfahren nach Anspruch 2, wobei Schritt b) Abscheiden von leitfähigem Material auf die elektrisch isolierende Substratschicht (48) umfasst, um eine elektrisch leitfähige Schicht (50) zu bilden.

4. Verfahren zur Herstellung eines Behälters für kryogene Flüssigkeiten (22) zum Speichern von kryogenen Flüssigkeiten (30), wie etwa flüssigem Wasserstoff, wobei das Verfahren Folgendes umfasst:
a) Bilden eines Behälterkörpers, der mindestens eine Behälterwand (24, 26) aus mindestens einem Stück eines plattenförmigen Metallmaterials (46) aufweist;
b) Bilden einer elektrisch leitfähigen Leiterbahnstruktur (36) auf der mindestens einen Behälterwand (24, 26) eines Behälters für kryogene Flüssigkeiten (30), so dass die elektrisch leitfähige Leiterbahnstruktur (36) zum Leiten von Elektrizität von einem Anschluss (52) zu einem Sensor (34) geeignet ist, durch Oxidieren oder Oxidierenlassen des Metallmaterials (46), um eine isolierende Substratschicht (48) zu bilden, und Abscheiden von leitfähigem Material auf die elektrisch isolierende Substratschicht (48), um eine elektrisch leitfähige Schicht (50) zu bilden; und
c) Schließen der Behälterwand (24, 26), um ein kryogenes Speichervolumen (28) zum Speichern einer kryogenen Flüssigkeit (30) bei kryogenen Temperaturen zu definieren.

5. Verfahren nach einem der Ansprüche 1 bis 4, ferner umfassend einen Schritt d) zum Bilden mindestens eines Sensors (34), der elektrisch mit der elektrisch leitfähigen Leiterbahnstruktur (36) auf dem Stück aus plattenförmigem Metallmaterial (46) und/oder der Behälterwand (24, 26) gekoppelt wird.

6. Behälter für kryogene Flüssigkeiten (22) zum Speichern von kryogenen Flüssigkeiten (30), wobei der Behälter (22) Folgendes umfasst:
- einen Behälterkörper mit mindestens einer Behälterwand (24, 26), die ein kryogenes Speichervolumen (28) zum Speichern einer kryogenen Flüssigkeit (30) bei kryogenen Temperaturen definiert, wobei die Behälterwand (24, 26) aus mindestens einem Stück eines plattenförmigen Metallmaterials (46) gebildet ist; und
- eine elektrisch leitfähige Leiterbahnstruktur (36), die auf der mindestens einen Behälterwand (24, 26) ausgebildet und zum Leiten von Elektrizität von einem Anschluss (52) zu einem Sensor (34) ausgelegt ist, wobei der Behälterkörper und die elektrisch leitfähige Leiterbahnstruktur (36) eine Schichtstruktur (47) bilden.

7. Behälter (22) nach Anspruch 6, ferner umfassend mindestens einen Sensor (34), der elektrisch mit der elektrisch leitfähigen Leiterbahnstruktur (36) gekoppelt und auf der Behälterwand (24, 26) angeordnet ist.

8. Behälter (22) nach Anspruch 7, wobei mindestens ein Sensor (34) einstückig mit der Leiterbahnstruktur (36) ausgebildet ist.

9. Behälter (22) nach Anspruch 7 oder 8, wobei der mindestens eine Sensor (34) aus einer Gruppe ausgewählt ist, die aus Folgendem besteht:
- einem kapazitiven Sensor (42), der dazu ausgelegt ist, seine Kapazität in Abhängigkeit von einer physikalischen Eigenschaft in Bezug auf die kryogene Flüssigkeit (30) zu ändern;
- einem Widerstandssensor (40), der dazu ausgelegt ist, seinen Widerstand in Abhängigkeit von einer physikalischen Eigenschaft in Bezug auf die kryogene Flüssigkeit (30) zu ändern;
- einem Thermoelementsensor, der dazu ausgelegt ist, eine Spannung in Abhängigkeit von der Temperatur in Bezug auf die kryogene Flüssigkeit zu erzeugen; und
- einem Hochfrequenzsensor (44), der dazu ausgelegt ist, Funkwellen zu senden, zu empfangen oder zu senden und zu empfangen, um Messen einer physikalischen Eigenschaft in Bezug auf die kryogene Flüssigkeit zu ermöglichen.

10. Behälter (22) nach einem der Ansprüche 6 bis 9, wobei die mindestens eine Behälterwand (24, 26) einen Innenabschnitt, der dem Speichervolumen (28) zugewandt ist, und einen Außenabschnitt umfasst, der von dem Speichervolumen (28) abgewandt ist, wobei die elektrisch leitfähige Leiterbahnstruktur (36) auf dem Innenabschnitt und/oder dem Außenabschnitt ausgebildet ist.

11. Behälter (22) nach einem der Ansprüche 6 bis 10, wobei der Behälterkörper eine Behälterinnenwand (24) und eine Behälteraußenwand (26) umfasst, wobei die Behälterinnenwand (24) das Speichervolumen (28) definiert und die elektrisch leitfähige Leiterbahnstruktur (36) auf der Behälterinnenwand (24) und/oder der Behälteraußenwand (26) ausgebildet ist.

12. Behälter (22) nach einem der Ansprüche 6 bis 11, wobei der Behälterkörper einen Vakuumhohlraum (32) umfasst, der das Speichervolumen (28) umgibt und ein Vakuum hält.

13. Behälter (22) nach einem der Ansprüche 6 bis 12, wobei die Schichtstruktur (47) eine elektrisch isolierende Substratschicht (48), die Teil der mindestens einen Behälterwand (24, 26) ist oder auf dieser ausgebildet ist, und eine elektrisch leitfähige Schicht (50) umfasst, die auf der elektrisch isolierenden Substratschicht (48) ausgebildet ist, um von der mindestens einen Behälterwand (24, 26) elektrisch isoliert zu sein; und/oder wobei die Schichtstruktur (47) eine elektrisch isolierende Schutzschicht (56) umfasst, die auf der elektrisch leitfähigen Schicht (50) ausgebildet ist.

14. Behälteranordnung (20) für ein Luftfahrzeug (10), wobei die Behälteranordnung (20) einen Behälter (22) nach einem der Ansprüche 6 bis 13 und eine Steuereinheit (38) umfasst, die elektrisch mit der elektrisch leitfähigen Leiterbahnstruktur (36) gekoppelt und zum Messen von physikalischen Parametern ausgelegt ist, die sich auf die kryogene Flüssigkeit (30) beziehen.

15. Luftfahrzeug (10), umfassend einen Behälter (22) nach einem der Ansprüche 6 bis 13 oder eine Anordnung eines Behälters (22) nach Anspruch 14.

## Revendications

1. Procédé de fabrication d'un réservoir de liquide cryogénique (22) destiné à stocker des liquides cryogéniques (30) tels que l'hydrogène liquide, le procédé comprenant :
a) la formation d'un corps de réservoir qui comporte au moins une paroi de réservoir (24, 26) dans au moins un morceau de matériau métallique en forme de plaque (46) ;
b) la formation d'une structure de piste électroconductrice (36) sur le morceau de matériau métallique en forme de plaque (46), de telle sorte que la structure de piste électroconductrice (36) soit appropriée pour conduire l'électricité d'une borne (52) à un capteur (34) ; et, ensuite,
c) le façonnage du matériau métallique (46) en un corps de réservoir qui comporte au moins une paroi de réservoir (24, 26) qui définit un volume de stockage cryogénique (28) destiné à stocker un liquide cryogénique (30) à des températures cryogéniques.

2. Procédé selon la revendication 1, dans lequel l'étape b) comprend l'oxydation active ou passive du matériau métallique (46) de manière à former une couche de substrat isolant (48).

3. Procédé selon la revendication 2, dans lequel l'étape b) comprend le dépôt d'un matériau conducteur sur la couche de substrat électriquement isolant (48) de manière à former une couche électroconductrice (50).

4. Procédé de fabrication d'un réservoir de liquide cryogénique (22) destiné à stocker des liquides cryogéniques (30) tels que l'hydrogène liquide, le procédé comprenant :
a) la formation d'un corps de réservoir qui comporte au moins une paroi de réservoir (24, 26) dans au moins un morceau de matériau métallique en forme de plaque (46) ;
b) la formation d'une structure de piste électroconductrice (36) sur l'au moins une paroi de réservoir (24, 26) d'un réservoir de liquide cryogénique (30), de telle sorte que la structure de piste électroconductrice (36) soit appropriée pour conduire l'électricité d'une borne (52) à un capteur (34), par oxydation active ou passive du matériau métallique (46) de manière à former une couche de substrat isolant (48) et dépôt d'un matériau conducteur sur la couche de substrat électriquement isolant (48) de manière à former une couche électroconductrice (50) ; et
c) la fermeture de la paroi de réservoir (24, 26) de manière à définir un volume de stockage cryogénique (28) destiné à stocker un liquide cryogénique (30) à des températures cryogéniques.

5. Procédé selon l'une quelconque des revendications 1 à 4, comprenant en outre une étape d) de formation d'au moins un capteur (34) qui est couplé électriquement à la structure de piste électroconductrice (36) sur le morceau de matériau métallique en forme de plaque (46) et/ou la paroi de réservoir (24, 26).

6. Réservoir de liquide cryogénique (22) destiné à stocker des liquides cryogéniques (30), le réservoir (22) comprenant :
- un corps de réservoir comportant au moins une paroi de réservoir (24, 26) qui définit un volume de stockage cryogénique (28) destiné à stocker un liquide cryogénique (30) à des températures cryogéniques, la paroi de réservoir (24, 26) étant formée dans au moins un morceau de matériau métallique en forme de plaque (46) ; et
- une structure de piste électroconductrice (36) qui est formée sur l'au moins une paroi de réservoir (24, 26) et conçue pour conduire l'électricité d'une borne (52) à un capteur (34), le corps de réservoir et la structure de piste électroconductrice (36) formant une structure en couches (47).

7. Réservoir (22) de la revendication 6, comprenant en outre au moins un capteur (34) qui est couplé électriquement à la structure de piste électroconductrice (36) et disposé sur la paroi de réservoir (24, 26).

8. Réservoir (22) de la revendication 7, dans lequel au moins un capteur (34) est formé d'une seule pièce avec la structure de piste conductrice (36).

9. Réservoir (22) de la revendication 7 ou 8, dans lequel l'au moins un capteur (34) est choisi dans un groupe constitué par :
- un capteur capacitif (42) conçu pour modifier sa capacité en fonction d'une caractéristique physique relative au liquide cryogénique (30) ;
- un capteur résistif (40) conçu pour modifier sa résistance en fonction d'une caractéristique physique relative au liquide cryogénique (30) ;
- un capteur à thermocouple conçu pour générer une tension en fonction de la température relative au liquide cryogénique ; et
- un capteur radiofréquence (44) conçu pour émettre, recevoir, ou émettre et recevoir des ondes radio, de manière à permettre la mesure d'une caractéristique physique relative au liquide cryogénique.

10. Réservoir (22) de l'une quelconque des revendications 6 à 9, l'au moins une paroi de réservoir (24, 26) comprenant une partie intérieure qui fait face au volume de stockage (28) et une partie extérieure qui tourne le dos au volume de stockage (28), la structure de piste électroconductrice (36) étant formée sur la partie intérieure et/ou la partie extérieure.

11. Réservoir (22) de l'une quelconque des revendications 6 à 10, le corps de réservoir comprenant une paroi interne de réservoir (24) et une paroi externe de réservoir (26), la paroi interne de réservoir (24) définissant le volume de stockage (28), et la structure de piste électroconductrice (36) étant formée sur la paroi interne de réservoir (24) et/ou la paroi externe de réservoir (26).

12. Réservoir (22) de l'une quelconque des revendications 6 à 11, le corps de réservoir comprenant une cavité à vide (32) qui entoure le volume de stockage (28) et maintient un vide.

13. Réservoir (22) de l'une quelconque des revendications 6 à 12, dans lequel la structure en couches (47) comprend une couche de substrat électriquement isolant (48) qui fait partie de ou est formée sur l'au moins une paroi de réservoir (24, 26) et une couche électroconductrice (50) formée sur la couche de substrat électriquement isolant (48) de manière à être électriquement isolée de l'au moins une paroi de réservoir (24, 26) ; et/ou dans lequel la structure en couches (47) comprend une couche protectrice électriquement isolante (56) formée au-dessus de la couche électroconductrice (50).

14. Agencement de réservoir (20) pour un aéronef (10), l'agencement de réservoir (20) comprenant un réservoir (22) selon l'une quelconque des revendications 6 à 13 et une unité de commande (38) qui est couplée électriquement à la structure de piste électroconductrice (36) et conçue pour mesurer des paramètres physiques qui sont associés au liquide cryogénique (30).

15. Aéronef (10) comprenant un réservoir (22) selon de l'une quelconque des revendications 6 à 13 ou un agencement de réservoir (22) selon la revendication 14.
